# EUROPÄISCHE PATENTSCHRIFT

(11) **EP 3 711 127 B1**
(45) Veröffentlichungstag und Bekanntmachung des Hinweises auf die Patenterteilung: **27.07.2022**
(21) Anmeldenummer: 18830230.1
(22) Anmeldetag: 18.12.2018
(51) Int. Cl.: H02G 11/02, B65H 75/44

(54) **KABELTROMMEL FÜR EIN HOCHSPANNUNGSKABEL**
CABLE REEL FOR A HIGH-VOLTAGE CABLE
ENROULEUR DE CÂBLE POUR UN CÂBLE À HAUTE TENSION

(30) Priorität: 15.01.2018 DE 102018200587
(43) Veröffentlichungstag der Anmeldung: 23.09.2020
(73) Patentinhaber: Siemens Energy Global GmbH & Co. KG, 81739 München (DE)
(72) Erfinder: ETTL, Christian, 8160 Weiz (AT)
(86) Internationale Anmeldenummer: PCT/EP2018/085536
(87) Internationale Veröffentlichungsnummer: WO 2019/137761

(56) Entgegenhaltungen:
- EP-A1- 2 804 272
- WO-A1-2017/072226
- US-A- 3 103 322
- US-A- 3 458 152
- US-A1- 2012 223 179

## Beschreibung

Die Erfindung betrifft eine Kabelhalterung zum Langzeitlagern und Schnelltransport eines Hochspannungskabels mit einer rotierbaren Kabeltrommel, die einen Wickelzylinder und Seitenbegrenzungen aufweist, die mit dem Wickelzylinder drehfest verbunden sind und diesen umfänglich übertragen, einem Haltegestell zum drehbaren Lagern der Kabeltrommel und einem auf die Kabeltrommel gewickelten Hochspannungskabel.

Eine solche Kabelhalterung ist aus der US 3 458 152 A bekannt. Dort ist eine Kabelhalterung mit Kabeltrommel und Haltegestell offenbart, wobei die Kabeltrommel über einen Wickelzylinder verfügt, der drehfest mit einem Haltegestell verbunden ist. Auf die Kabeltrommel kann ein Stromkabel gewickelt werden. Der Durchmesser des Wickelzylinders ist so gewählt, das eine Beschädigung des Stromkabels beim Wickeln vermieden ist.

Die WO 2017/072226 A1 betrifft ebenfalls eine Kabelhalterung, die ein Hochspannungskabel aufweist. Die besagte Kabelhalterung dient zum Langzeitlagern und Schnelltransport des Hochspannungskabels und ist mit einer rotierbaren Kabeltrommel ausgerüstet, die einen Wickelzylinder mit Seitenbegrenzungen aufweist. Ferner ist ein Haltegestell zum drehbaren Lagern der Kabeltrommel vorgesehen.

Auch die US 2012/223179 A1 schlägt eine solche Kabelhalterung vor.

Weiterer Stand der Technik ist in der US 3 103 322 A und der EP 2 804 272 A1 beschrieben.

Dem Fachmann ist aus der Praxis bekannt, dass Hochspannungskabel üblicherweise auf Kabelhalterungen gelagert sind, die eine drehbare Kabeltrommel aufweisen. Die Kabeltrommel verfügt über einen Wickelzylinder, der kreiszylindrisch ausgestaltet ist und sich zwischen zwei Seitenwandungen erstreckt. Dabei ist die Kabeltrommel um eine Drehachse rotierbar, die in der Regel horizontal ausgerichtet ist. Zum waagerechten Halten der Kabeltrommel dient ein Haltegestell, das zwei Drehlager zur Aufnahme von Drehzapfen aufweist, die sich beidseitig der Kabeltrommel erstrecken.

In der WO 2017/186716 A1 ist eine Containeranordnung zur Aufnahme einer solchen Kabelhalterung beschrieben. Die in den Containern angeordnete Kabelhalterung dient zur schnellen Inbetriebnahme einer Anordnung von einphasigen Leistungstransformatoren vor Ort, so dass im Fehlerfall ein ausgefallener Transformator schnell ersetzt werden kann.

Aus der WO 2017/186748 A2 ist eine Leistungstransformatoreinheit bekannt, die ebenfalls schnell transportiert und innerhalb kürzester Zeit vor Ort in Betrieb genommen werden kann. Die Leistungstransformatoreinheit besteht aus mehreren einphasigen Leistungstransformatoren. Um die einphasigen Transformatoren möglichst flexibel aufstellen und mit einer Phase eines Energieversorgungsnetzes verbinden zu können, ist ein Freiluftanschluss vorgesehen, der über eine Kabelverbindung an den jeweiligen einphasigen Transformator angeschlossen werden kann.

Der eingangs genannten Kabelhalterung haftet der Nachteil an, dass dieser keine Langzeitlagerung des Hochspannungskabels über mehrere Jahre erlaubt, ohne dass das auf der Kabeltrommel aufgewickelte Hochspannungskabel von Zeit zu Zeit abgerollt werden muss.

Aufgabe der Erfindung ist es daher, eine Kabelhalterung der eingangs genannten Art bereitzustellen, dessen Hochspannungskabel zum Anschluss an einen luftisolierten Hochspannungsleiter vorkonfektioniert ist.

Die Erfindung löst diese Aufgabe dadurch, dass der Wickelzylinder einen Durchmesser von über 1300 mm aufweist.

Erfindungsgemäß ist eine Kabelhalterung bereitgestellt, die eine Kabeltrommel mit einem Wickelzylinder aufweist, der einen gegenüber üblichen Wickelzylindern vergrößerten Durchmesser aufweist, so dass der Biegeradius des Hochspannungskabels, das auf die Kabeltrommel gewickelt ist, so groß ist, das eine Langzeitlagerung ermöglicht und ein aufwendiges Abrollen des Hochspannungskabels in zuvor festgelegten Zeitintervallen vermieden ist. Die erfindungsgemäße Kabelhalterung kann daher auch über einen langen Zeitraum hinweg mit dem aufgewickelten Hochspannungskabel gelagert werden.

Der Wickelzylinder ist im Rahmen der Erfindung zylinderförmig ausgebildet. Dabei kann der Wickelzylinder beispielsweise kreiszylindrisch ausgebildet sein. Aber auch eine polygone Zylinderform ist im Rahmen der Erfindung möglich. Bei einem polygonen Zylinder ist dessen Querschnitt mehreckig, z. B. viereckig, sechseckig, achteckig usw. Der Wickelzylinder ist beispielsweise hohl ausgeführt, um Gewicht zu sparen. Bei einer polygonen Zylinderform ergibt sich der Durchmesser bei einer Querschnittsansicht als kleinster Abstand zweier Punkte auf einer Einhüllenden.

Vorteilhafterweise ist das Hochspannungskabel für Betriebsspannungen zwischen 70 kV und 160 kV und insbesondere zwischen 100 kV und 155 kV ausgelegt. Hochspannungskabel in diesem Spannungsbereich sind für Anwendungen im Zusammenhang mit Leistungstransformatoren im Bereich der Energieübertragung geeignet. Dabei dient das Hochspannungskabel beispielsweise zur Verbindung von einphasigen Transformatoren auf deren Unterspannungsseite.

Gemäß einer bevorzugten Ausgestaltung der Erfindung ist eine Antriebseinheit vorgesehen, die zum Drehen der Kabeltrommel in beiden Richtungen dient. Die Kabeltrommel ist in der Regel so raumgreifend ausgestaltet, dass das Auf- und Abwickeln des Hochspannungskabels auf die Kabeltrommel von Hand beschwerlich ist. Um den Wicklungsvorgang zu vereinfachen oder überhaupt erst zu ermöglichen, ist eine Antriebseinheit vorgesehen, welche ausgangsseitig eine Drehbewegung erzeugt, die über zweckmäßige Kraftübertragungsmittel in die Kabeltrommel eingeleitet wird, so dass diese in beiden Richtungen gedreht werden kann. Die Antriebseinheit kann grundsätzlich beliebig ausgeführt sein. So kommt im Rahmen der Erfindung beispielsweise eine elektrische oder hydraulische Antriebseinheit in Betracht.

Gemäß einer bevorzugten Variante der Erfindung ist die Antriebseinrichtung jedoch eine pneumatische Antriebseinrichtung. Mit Hilfe einer pneumatischen Antriebseinrichtung kann der Auf- und Abrollvorgang des Hochspannungskabels unabhängig von der elektrischen Spannungsversorgung erfolgen. Dies ermöglicht die universelle Einsetzbarkeit der erfindungsgemäßen Kabelhalterungen ohne Rücksicht auf die vor Ort vorhandenen Spannungsquellen, die hinsichtlich ihrer Frequenz oder Betriebsspannung variieren können. Im Rahmen dieser Weiterentwicklung wird die Druckluft von einem Kompressor oder einem Druckluftsystem eines Kraftfahrzeugs bereitgestellt.

Erfindungsgemäß verfügt das Hochspannungskabel an einem seiner Enden über einen feststoffisolierten Kabelendverschluss sowie an seiner vom Kabelendverschluss abgewandten Ende über ein Steckteil einer Hochspannungssteckverbindung. Mit anderen Worten ist das Hochspannungskabel für den gewünschten Einsatz vorkonfektioniert. Dazu verfügt das Hochspannungskabel beidseitig über die geforderten Anschlüsse. Der feststoffisolierte Kabelendverschluss dient zur Verbindung mit einem Freiluftanschluss, der z. B. in der WO 2017/186749 A1 beschrieben ist. Der Freiluftanschluss umfasst ein Haltegerüst, das zur Aufnahme des feststoffisolierten Kabelendverschlusses eingerichtet ist. Mit Hilfe des Freiluftanschlusses kann der Kabelendverschluss an beliebiger Stelle vor Ort aufgestellt werden, so dass eine flexible und schnelle Verbindung mit einem luftisolierten Hochspannungsleiter ermöglicht ist.

An einem vom Kabelendverschluss abgewandten Ende verfügt das Hochspannungskabel über ein Steckteil, das Teil einer Hochspannungssteckverbindung ist. Die Hochspannungssteckverbindung umfasst neben dem Steckteil ein Geräteanschlussteil, das beispielsweise als Steckbuchse ausgeführt ist. Ein solches Geräteanschlussteil ist beispielhaft in der WO 2017/186751 A1 beschrieben. Die dort beschriebene Steckbuchse verfügt über einen Befestigungsabschnitt, der beispielsweise als Flansch ausgeführt ist, mit dem die Steckbuchse fest an einem Gehäuse, beispielsweise eines Transformators, montiert werden kann. Um die Steckbuchse luft- und flüssigkeitsdicht an dem Gehäuse zu befestigen, sind Dichtmittel vorgesehen, die zwischen dem Gehäuse und dem als Flansch ausgeführten Befestigungsabschnitt verklemmt sind. Jede Steckbuchse weist ferner einen Aufnahmeabschnitt auf, der aus einem elektrisch nicht leitenden Material besteht. Dabei verjüngt sich der Aufnahmeabschnitt zu einem geschlossenen Ende hin. An dem geschlossenen Ende wird die Wandung des Aufnahmeabschnitts von einem bolzenförmigen Kontaktteil durchragt, das elektrisch leitend und beispielsweise aus einem metallischen Werkstoff hergestellt ist. An seiner dem Innenraum des Gehäuses zugewandten Seite ist das Kontaktteil über eine Wicklungsanschlussleitung beispielsweise mit einer Wicklung eines Transformators verbunden. Dabei ist der Aufnahmeabschnitt formkomplementär zu einem Einführabschnitt des Steckteils ausgebildet, so dass es zu einem passgenauen Anliegen der beiden Komponenten aneinander kommt und Luft oder sonstige Einschlüsse zwischen diesen beiden Bauteilen vermieden sind.

Vorteilhafterweise umfasst die Kabelhalterung im Rahmen der Erfindung eine Endverschlusshalterung zum Halten eines Kabelendverschlusses in einer waagerechten Stellung. Für die Langzeitlagerung, beispielsweise in einem Container, wird der trockenisolierte Endverschluss nicht an der Kabeltrommel gehalten, sondern von dieser abgenommen und in einem speziell für den Kabelendschluss ausgebildeten Endverschlusshalterung abgelegt. Der beispielsweise konisch ausgestattete Kabelendverschluss macht eine horizontal ausgerichtete Lagerung erforderlich, so dass Schäden infolge einer Langzeitlagerung vermieden werden können. Der Kabelendverschluss verfügt erfindungsgemäß an seinem freien Ende über einen Freiluftanschluss. Von diesem Freiluftanschluss erstreckt sich ein länglicher Isolator, durch den hindurch sich ein mit dem Freiluftanschluss verbundener Isolatorinnenleiter erstreckt. Der Isolatorinnenleiter ist mit dem Innenleiter des Hochspannungskabels verbunden.

Die Kabeltrommel und das Haltegestell sind vorteilhafterweise aus einem metallischen Werkstoff und beispielsweise verzinktem Stahl hergestellt. Zur Halterung der Kabeltrommel auf dem Haltegestell dienen handelsübliche Kugellager. Selbstverständlich wird beim Transport der Kabelhalterung die Kabeltrommel gesichert und fixiert, so dass eine Drehbewegung während des Transports unmöglich gemacht ist.

Vorteilhafterweise ist der Wickelzylinder kreiszylindrisch ausgebildet.

Gemäß einer bevorzugten Weiterentwicklung weist die gesamte Kabelhalterung eine Breite von weniger als 2352 mm und eine Höhe von weniger als 2690 mm auf. Gemäß dieser vorteilhaften Weiterentwicklung ist es möglich, die erfindungsgemäße Kabelhalterung in einem standardisierten 20 Fuß Container aufzunehmen. In dem 20 Fuß Container kann die darin gesicherte Kabeltrommel einschließlich der möglichen Endverschlusshalterung auch über lange Zeiträume hinweg gelagert und bei Bedarf schnell zu dem jeweils gewünschten Einsatzort transportiert werden.

Zweckmäßigerweise weist das Haltegestell Ausnehmungen zum Einführen jeweils eines Zinkens eines Gabelstaplers auf. Das Haltegestell stellt die notwendige mechanische Festigkeit bereit, um die Kabeltrommel und das Hochspannungskabel sicher drehbar lagern zu können. Dabei verfügt das Haltegestell z. B. über einen flachen Boden, in dem die Ausnehmungen für die Gabelstaplerzinken vorgesehen sind. An beiden Seiten des Bodens sind einander gegenüberliegende Halteschienen vorgesehen, die das gewünschte Lager zur Aufnahme der Kabeltrommel aufweisen.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel der erfindungsgemäßen Kabelhalterung in einer perspektivischen Ansicht,
- Figur 2: zwei in einem Container aufgenommene Kabelhalterungen gemäß einem Ausführungsbeispiel der Erfindung und
- Figur 3: zwei weitere Ausführungsbeispiele der erfindungsgemäßen Kabelhalterung einschließlich einer Endverschlusshalterung innerhalb eines Containers verdeutlichen.

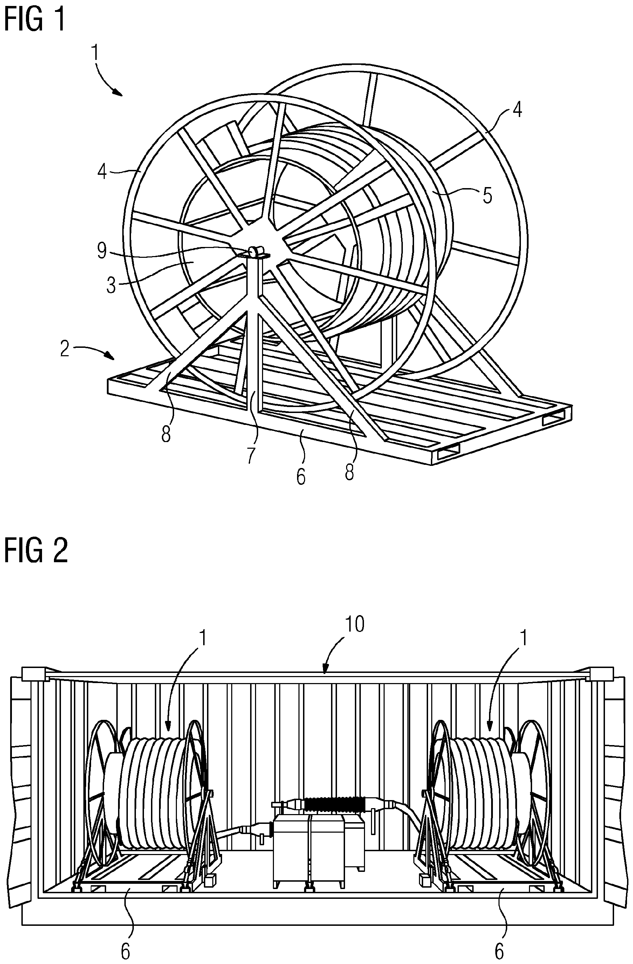

Figur 1 zeigt ein Ausführungsbeispiel einer erfindungsgemäßen Kabelhalterung 1 gemäß der vorliegenden Erfindung. Die Kabelhalterung 1 verfügt über ein Haltegestell 2, eine Kabeltrommel mit Wickelzylinder 3 und zwei Seitenbegrenzungen 4, die beidseitig des Wickelzylinders 3 angeordnet und fest mit diesem verbunden sind. Auf den Wickelzylinder 3 ist ein Hochspannungskabel 5 gewickelt. Das Haltegestell 2 weist einen Boden 6 sowie einen Halteträger 7 und zwei Querversteifungen 8 auf, die sich jeweils zwischen einer Ecke des Bodens 6 und dem Halteträger 7 erstrecken. Der Halteträger 7 ragt an einer Seite des Bodens 6 in mittiger Position senkrecht von diesem auf. An seiner vom Boden 6 abgewandten Seite ist ein Drehlager 9 angeordnet. Die fest mit dem hohlen und kreiszylindrisch ausgebildeten Wickelzylinder 3 verbundenen Seitenbegrenzungen 4 weisen einen figürlich nicht dargestellten Lagerbolzen auf, der in das Drehlager 9 des jeweiligen Halteträgers eingreift und dort von einem Kugellager drehbar gehalten ist. Auf diese Art und Weise ist die Kabeltrommel 3, 4 drehbar in dem Haltegestellt 2 gelagert.

Figur 2 zeigt zwei Kabelhalterungen 1 gemäß Figur 1, die innerhalb eines 20 Fuß Containers 10 angeordnet sind. Der Innenraum des 20 Fuß Containers hat eine Breite von 2352 mm und eine Höhe von 2690 mm. Es ist erkennbar, dass die Kabelhalterungen 1 kleiner als diese Maße ausgestaltet sind, wobei im Boden 6 eines jeden Haltegestells 2 zwei Ausnehmungen 11 erkennbar sind, die das Einführen eines Zinkens eines Gabelstaplers ermöglichen. Mit Hilfe des Gabelstaplers können die Kabelhalterungen 1 bequem in den 20 Fuß Container hinein- oder herausgehoben werden.

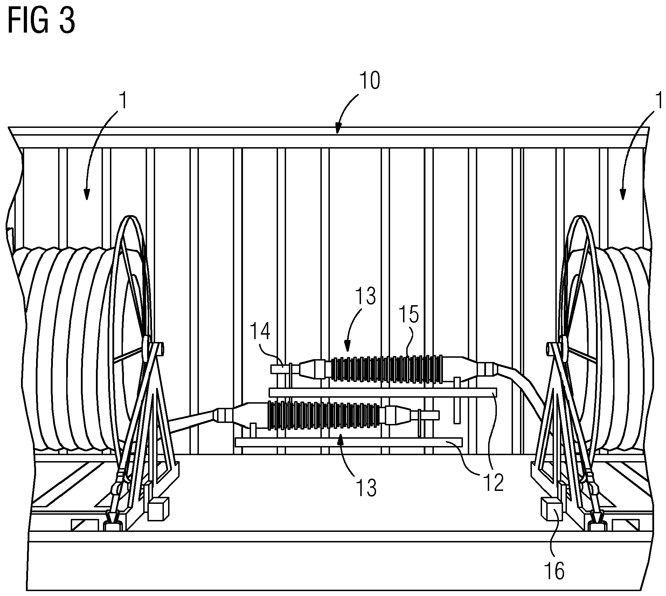

Figur 3 zeigt ein weiteres Ausführungsbeispiel einer erfindungsgemäßen Kabelhalterung 1. Dazu sind zwei Kabelhalterungen 1 in einem 20 Fuß Container 10 abgestellt. In dieser Darstellung ist erkennbar, dass jede Kabelhalterung 1 eine Endverschlusshalterung 12 aufweist. Die Endverschlusshalterung 12 ist fest mit einer Seitenwand des Containers 10 verbunden und dient zur horizontalen Lagerung eines feststoffisolierten Kabelendverschlusses 13, der das Hochspannungskabel 5 an einem seiner Enden abschließt. Der Kabelendverschluss 10 verfügt über einen Freiluftanschluss 14, der am freien Ende aus einem konisch ausgestalteten Isolator 15 herausragt und zur Verbindung mit einer luftisolierten Hochspannungsleitung vorgesehen ist. Durch den Isolator 15 erstreckt ein mit dem Freiluftanschluss 14 elektrisch leitend verbundener figürlich nicht dargestellter Innenleiter. Zur Vermeidung von Kriechströmen ist der Isolator 15 außen mit Rippen versehen. Der Innenleiter des Isolators 15 ist wiederum mit dem Innenleiter des Hochspannungskabels 5 verbunden, das auf der Kabeltrommel 3, 4 einer jeden Kabelhalterung 1 aufgewickelt ist.

Um die Kabeltrommel 3, 4 nicht von Hand in Drehung versetzen zu müssen, ist eine pneumatische Antriebseinrichtung 16 vorgesehen, die fest mit dem Haltegestell 2 verbunden ist. Die pneumatische Antriebseinrichtung 16 ist mit dem Druckluftsystem eines Lastkraftwagens verbindbar, so dass die Antriebseinrichtung 16 von der jeweils vor Ort herrschenden Spannungsversorgung unabhängig ist.

Die Kabeltrommel 3, 4 der in den Figuren 1 bis 3 gezeigten Kabelhalterungen 1 weist eine horizontale Drehachse auf, wobei der Innendurchmesser des kreiszylindrischen Wickelzylinders 3 1500 mm beträgt. Das Hochspannungskabel 5 kann daher auch über lange Zeiträume hinweg von der Kabelhalterung 1 gehalten werden, ohne dass das Hochspannungskabel 5 in festen Intervallen von der Kabeltrommel 3, 4 abgewickelt werden muss. Dabei ist die Kabelhalterung 1 so kompakt ausgebildet, dass eine Lagerung der Kabelhalterung 1 innerhalb eines standardisierten 20 Fuß Containers ermöglicht ist. Auf diese Art und Weise ist eine kostengünstige Lagerung über lange Zeiträume hinweg ermöglicht, wobei bei Bedarf der Container 10 mit der Kabelhalterung 1 schnell zu dem gewünschten Zielort transportiert werden kann.

## Patentansprüche

1. Kabelhalterung (1) zum Langzeitlagern und Schnelltransport eines Hochspannungskabels (5) mit
- einer rotierbaren Kabeltrommel (3, 4), die einen Wickelzylinder (3) und Seitenbegrenzungen (4) aufweist, die mit dem Wickelzylinder (3) drehfest verbunden sind und diesen umfänglich überragen,
- einem Haltegestell (2) zum drehbaren Lagern der Kabeltrommel (3, 4) und
- einem auf die Kabeltrommel (3, 4) gewickelten Hochspannungskabel (5),
- wobei der Wickelzylinder (3) einen Durchmesser von über 1300 mm aufweist,
**dadurch gekennzeichnet, dass** das Hochspannungskabel (5) einen feststoffisolierten Kabelendverschluss (13) sowie an seiner vom Kabelendverschluss (13) abgewandten Seite ein Steckteil einer Hochspannungssteckverbindung aufweist, wobei der Kabelendverschluss an seinem freien Ende über einen Freiluftanschluss verfügt.

2. Kabelhalterung (1) nach Anspruch 1,
**dadurch gekennzeichnet, dass** das Hochspannungskabel (5) für Betriebsspannungen zwischen 70 kV und 160 kV und insbesondere zwischen 100 kV und 155 kV ausgelegt ist.

3. Kabelhalterung (1) nach einem der vorhergehenden Ansprüche,
**dadurch gekennzeichnet, dass** eine Antriebseinheit (16) zum Drehen der Kabeltrommel (3, 4) in beide Richtungen vorgesehen ist.

4. Kabelhalterung (1) nach Anspruch 3,
**dadurch gekennzeichnet, dass** die Antriebseinrichtung eine pneumatische Antriebseinrichtung (16) ist.

5. Kabelhalterung (1) nach Anspruch 1,
**dadurch gekennzeichnet, dass** eine Endverschlusshalterung (12) zum Halten des Kabelendverschlusses (13) in einer waagerechten Position vorgesehen ist.

6. Kabelhalterung (1) nach einem der vorhergehenden Ansprüche,
**dadurch gekennzeichnet, dass** der Wickelzylinder (3) kreiszylindrisch ausgebildet ist.

7. Kabelhalterung (1) nach einem der vorhergehenden Ansprüche,
**dadurch gekennzeichnet, dass** diese eine Breite kleiner als 2352 mm und eine Höhe kleiner als 2690 mm aufweist.

8. Kabelhalterung (1) nach einem der vorhergehenden Ansprüche,
**dadurch gekennzeichnet, dass** das Haltegestell (2) Ausnehmungen (11) zum Einführen eines Zinkens eines Gabelstaplers aufweist.

## Claims

1. Cable holder (1) for the long-term storage and the rapid transportation of a high-voltage cable (5), having
- a rotatable cable reel (3, 4), which has a winding cylinder (3) and side limits (4) which are connected for conjoint rotation with the winding cylinder (3) and protrude over the circumference thereof,
- a holding frame (2) for rotatably mounting the cable reel (3, 4), and
- a high-voltage cable (5), which is wound onto the cable reel (3, 4),
- wherein the winding cylinder (3) has a diameter of over 1300 mm,
**characterized in that**
the high-voltage cable (5) has a cable termination (13) with solid insulation, and a plug-in part of a high-voltage plug connection at its end remote from the cable termination (13), wherein the cable termination has an outdoor terminal at its free end.

2. Cable holder (1) according to Claim 1,
**characterized in that**
the high-voltage cable (5) is designed for operating voltages of between 70 kV and 160 kV and, in particular, of between 100 kV and 155 kV.

3. Cable holder (1) according to either of the preceding claims,
**characterized in that**
a drive unit (16) is provided for rotating the cable reel (3, 4) in both directions.

4. Cable holder (1) according to Claim 3,
**characterized in that**
the drive device is a pneumatic drive device (16).

5. Cable holder (1) according to Claim 1,
**characterized in that**
a termination holder (12) for holding the cable termination (13) in a horizontal position is provided.

6. Cable holder (1) according to any of the preceding claims,
**characterized in that**
the winding cylinder (3) is of circular-cylindrical design.

7. Cable holder (1) according to any of the preceding claims,
**characterized in that**
the said holder has a width of less than 2352 mm and a height of less than 2690 mm.

8. Cable holder (1) according to any of the preceding claims,
**characterized in that**
the holding frame (2) has apertures (11) for the insertion of a prong of a forklift truck.

## Revendications

1. Support (1) de câble pour le stockage de longue durée et le transport rapide d'un câble (5) à haute tension, comprenant
- un enrouleur (3, 4) de câble tournant, qui a un cylindre (3) d'enroulement et des délimitations (4) latérales, qui sont solidaires en rotation du cylindre (3) d'enroulement et sont plus hautes sur le pourtour que celui-ci,
- un bâti (2) de maintien pour le montage à rotation du dérouleur (3, 4) de câble et
- un câble (5) à haute tension enroulé sur le dérouleur (3, 4) de câble,
- dans lequel le cylindre (3) d'enroulement a un diamètre de plus de 1 300 mm,
**caractérisé en ce que** le câble (5) à haute tension a une boîte (13) de bout de câble à isolation dans de la matière solide, ainsi que, de son côté, loin de la boîte (13) de bout de câble, une partie d'enfichage d'une connexion par fiche, la boîte de bout de câble disposant à son extrémité libre d'une connexion à l'extérieur.

2. Support (1) de câble suivant la revendication 1, **caractérisé en ce que**
le câble (5) à haute tension est conçu pour des tensions de fonctionnement comprises entre 70 kV et 160 kV, et notamment comprises entre 100 kV et 155 kV.

3. Support (1) de câble suivant l'une des revendications précédentes,
**caractérisé en ce qu'**
il est prévu une unité (16) d'entraînement pour faire tourner le dérouleur (3, 4) de câble dans les deux sens.

4. Support (1) de câble suivant la revendication 3, **caractérisé en ce que**
le dispositif d'entraînement est un dispositif (16) d'entraînement pneumatique.

5. Support (1) de câble suivant la revendication 1, **caractérisé en ce qu'**
un support (12) de boîte de bout pour maintenir la boîte (13) de bout de câble est prévu dans une position horizontale.

6. Support (1) de câble suivant l'une des revendications précédentes,
**caractérisé en ce que**
le cylindre (3) d'enroulement est constitué sous la forme d'un cylindre de section transversale circulaire.

7. Support (1) de câble suivant l'une des revendications précédentes,
**caractérisé en ce qu'**
il a une largeur plus petite que 2 352 mm et une hauteur plus petite que 2 690 mm.

8. Support (1) de câble suivant l'une des revendications précédentes,
**caractérisé en ce que**
le bâti (2) de maintien a des évidements (11) pour l'introduction d'une fourche d'un chariot à fourche.
